# EUROPEAN PATENT APPLICATION

(11) **EP 3 118 616 A1**
(43) Date of publication of application: **18.01.2017**
(21) Application number: 16382178.8
(22) Date of filing: 22.04.2016
(51) Int. Cl.: G01N 27/406, G01N 27/407

(54) **GAS SENSOR**

(30) Priority: 17.07.2015 ES 201531055
(71) Applicant: Francisco Albero S.A.U., 08908 L'Hospitalet de Llobregat (ES)
(72) Inventor: GARCÍA CANTON, Jesus, 08908 L'HOSPITALET DE LLOBREGAT (ES); GARCIA VAN EST, KOEN, 08908 L'HOSPITALET DE LLOBREGAT (ES); RAMOS PEREZ, Francisco, 08908 L'HOSPITALET DE LLOBREGAT (ES)
(74) Representative: Gallego Jiménez, José Fernando

(57) **Abstract**

Gas sensor provided with an impermeable insulation of its electrical connections, comprising an element sensitive to the gas being measured, a housing which lodges said element and covers the electrical connections, a cable gland through which the electrical cables are led out, and a protector, preferably of tubular shape, which covers the electrical cables in their zone outside the housing at one side, and at the other side encloses the cable gland. The end of the protector is enclosed by the housing, which is clamped to achieve an impermeable junction.

## Description

### SUBJECT MATTER OF THE INVENTION

The subject matter of the present application is a gas sensor suitable for use in environments with high risk of short circuiting of the electrical connections.

### FIELD OF THE INVENTION

This invention can be employed in the manufacture of gas sensors, there being a large interest especially in the field of exhaust gas sensors of internal combustion engines.

### PRIOR ART

The usefulness of gas sensors is widely known. For example, in motor vehicles they are essential devices for compliance with the ever more restrictive standards on emissions of polluting gases. A gas sensor located in the exhaust pipe carries information to the switching center of the engine as to the content of oxygen in the combustion gases, making it possible for it to regulate the composition of the air/fuel mixture which should be used. The sensor contributes to establishing a ratio as close as possible to stoichiometric, so that the harmful emissions are reduced to the minimum thanks to an optimized combustion.

One very common type of gas sensor is based on a sheet of zirconium ceramics doped with yttrium oxide (YSZ), which acts like an electrolyte conducting oxygen ions when heated above 400° C.

One example of this type of gas sensor is shown in patent No. EP1800117. The end of the sensor element which contains the electrolyte is situated inside the exhaust pipe. Between the two electrodes making contact with the electrolyte is generated an electromotive force which, according to the Nernst equation, depends on the difference in the oxygen concentration existing between the side of the electrolyte where the gas being measured is located and the side where the reference gas used is located. The signal generated in the electrodes is transmitted via several connection tracks housed lengthwise in the unheated portion of the sensor element, radially crossing the exhaust pipe. In the zone of the sensor element outside of the exhaust pipe, these tracks are connected to the electrical cables which will send the signal to the switching center of the engine. This connection should be isolated both from the exhaust gases through the inside of the housing and any pollutant on the outside which might short circuit the electrical cables.

The internal insulation of the sensor is usually done by pressing insulating material which fills transversely the space between the central conduit of the sheet of YSZ and its housing. For the insulation of the outside, one usually employs a cable gland or sleeve with openings through which the cables are introduced in proper manner. The cable gland is typically made of partially elastic material and it is housed at the end of the housing. In addition, the cables are usually covered with a flexible protector in the shape of a sleeve. Patent No. EP 0870192 shows an example of this type of insulation. In this case, the end of the flexible protector encloses the end of the housing. A metal ring surrounds the protector in the junction zone, which is clamped to make sure that the protector is firmly secured to the housing. In addition, the clamping should make the junction impermeable.

### DESCRIPTION OF THE INVENTION

The present invention consists in a gas sensor provided with protection elements which guard its electrical connections against short circuits caused by polluting elements arriving from the outside of the sensor, with the benefit that its assembly is more economical and easier than the solution reported in the prior art.

This gas sensor contains a sensor element, one or more electrical cables which connect the sensor element and transmit the measurement to external devices, a metal housing which covers at least the connection between the sensor element and the cables, a partially elastic cable gland through which the cables are led out, and a protector, preferably flexible and of tubular shape, which covers the cables in their zone outside the housing for the purpose of avoiding excessive bending which might break them. The innovation of the invention lies in the fact that one end of the protector encloses at least partly the cable gland, while the metal housing surrounds the protector on the outside. Thanks to these characteristics, it is not necessary to have a metal ring securing the protector against the housing, thus reducing the number of components. The same housing secures the protector, and the latter the cable gland, such that the protector is arranged concentrically between the housing and the cable gland, and a region of the inner surface of the protector is in contact with the cable gland, while a region of the outer surface of the protector is in contact with the housing.

In order for the assembly to be firmly secured and the junction to be impermeable, it is preferable to produce a clamping in the junction zone of the three elements, that is, where the housing cover the protector and the protector covers the cable gland. Nevertheless, other methods of securing or impermeabilization would be possible.

To improve the fastening of the protector, it contains at one end a peripheral flange, open toward the outside, which is held in a zone of narrowing of the housing. Likewise, the protector is preferably made of or has a base of teflon, so that the fastening is also improved if the cable gland is also made of teflon.

Optionally, the cable gland can include a chamfer at the perimeter of its outer surface for the purpose of facilitating its insertion in the protector.

The configuration of this invention is adequate to ensure an effective insulation of the electrical connections of the gas sensors used in environments with high risk of short circuit, including conditions of thermal stress of the metal housing.

Other characteristics and advantages of the gas sensor of the present invention will become apparent from the description of a preferred but not exclusive embodiment, illustrated as a nonlimiting example in the accompanying drawings, where:

### BRIEF DESCRIPTION OF THE DRAWINGS

Figure 1 is a longitudinal section view of the gas sensor according to the present invention;
Figure 2 is an enlarged view of the longitudinal section in the connection zone; and
Figure 3 is an elevation view of the gas sensor of the invention.

### DESCRIPTION OF A PREFERRED EMBODIMENT

Looking at the aforementioned figures, and according to the numerical references used, one can see in them a preferred sample embodiment of the invention.

The gas sensor described hereafter is a sensor for the measurement of the exhaust gases of an internal combustion engine. Since its structure and operation have been extensively reported in the literature, the following description shall make mention primarily of the components which assist in the interpreting of the proposed invention.

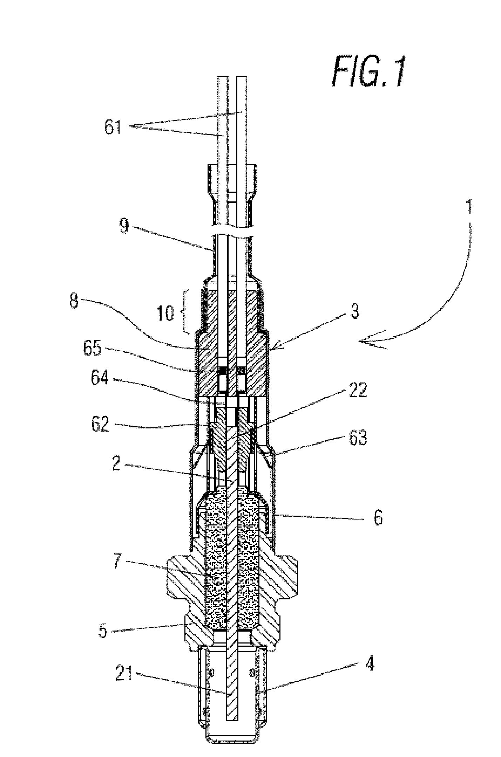

Figure 1 shows a longitudinal section of the gas sensor (1). This comprises a sensor element (2), with an oxygen measurement zone (21) and a connection zone (22). The sensor element (2) is lodged in a metal housing (3), which is formed by a cylindrical cap (4) welded to a hexagonal casing (5) and a cylindrical lid (6), likewise welded to the casing (5). The cap (4) houses the measurement zone (21) of the sensor element (2), which is situated inside the exhaust pipe of the engine and contains openings which allow the gas being measured to circulate in the interior so that it reaches the sensor element (2) in controlled manner. The casing (5) houses the insulating material (7), such that it hermetically insulates the connection zone (22) from the measurement zone (21) through which the gas flows that is being measured. The lid (6) houses the elements which make the electrical connection between the connection tracks (not shown in the drawings) of the sensor element (2) and the electrical cables (61) which are routed to the switching center of the engine. Specifically, a ceramic pin (62) actuated by a metal spring (63) presses an electrical connector (64) against the connection tracks of the sensor element (2). The electrical connector (64) in turn contains a bracket shaped piece (65) which makes contact with the electrical cables (61).

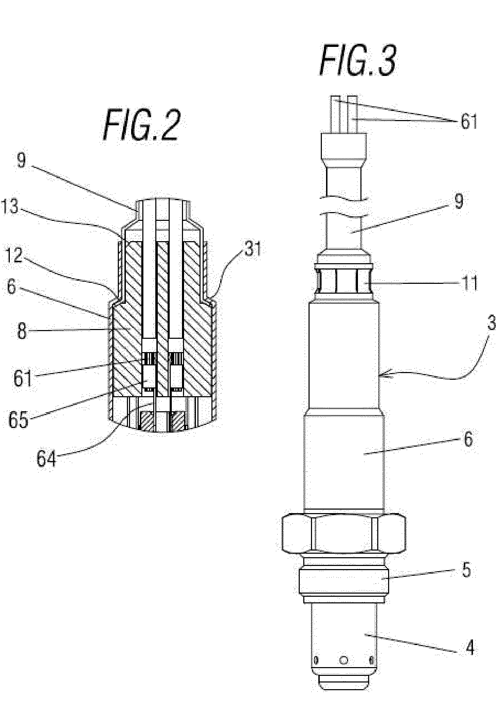

Figure 2 shows in detail the zone of connection between the electrical connector (64) and the cables (61). To insulate the zone where the cables (61) emerge from the lid (6), a partly elastic cable gland (8) is installed, with openings through which the cables (61) are led out. A protector (9), preferably flexible and with a tubular shape, covers the cables (61) in their zone outside the housing (3) to protect them from excessive bending which might break them. In turn, the protector (9) encloses the cable gland (8). The junction zone (10) is defined as the zone where the protector (9) encloses the cable gland (8). The end of the housing (3) encloses the protector in the junction zone (10), such that the end of the protector (9) is situated between the housing (3) and the cable gland (8).

In order for the housing (3), the cable gland (8) and the protector (9) to be firmly secured and at the same time to achieve a hermetic junction between them which prevents the passage of any liquid fluid, a clamping (11) is produced in the junction zone (10), shown in the elevation view of the gas sensor (1) in Fig. 3.

As will be seen more clearly in Fig. 2, the protector (9) has at its end a peripheral flange (12) open toward the outside, which is held in a zone of narrowing (31) of the housing (3), enabling a better fastening between them.

The cable gland (8) includes a chamfer (13) at the perimeter of its surface outside the housing, in order to facilitate its insertion into the protector (9).

The details, the shapes, the dimensions and other accessory elements used in the manufacture of the gas sensor of the invention can be conveniently replaced by others within the scope as defined by the claims which are presented below.

## Claims

1. Gas sensor which comprises a sensor element (2) having a measurement zone (21) and a connection zone (22), a housing (3) which lodges the sensor element (2) and covers at least the connection zone (22), at least one electrical cable (61) which makes contact with the sensor element (2) in the connection zone (22), a cable gland (8) provided with through openings in which at least one cable (61) runs from the connection zone (22) to the outside of the housing (3) and a protector (9) which covers the cable (61) in its zone outside the housing (3), **characterized in that** the protector (9) encloses at least one region of the cable gland (8) and the housing (3) surrounds the protector (9) at least in the zone where the protector (9) encloses the cable gland (8).

2. Gas sensor according to any one of the preceding claims, **characterized in that** the housing (3) and the protector (9) are secured together in a clamp (11) in the zone where the protector encloses the cable gland, and the cable gland (8) is secured to the protector (9) by the clamp (11).

3. Gas sensor according to any one of the preceding claims, **characterized in that** the protector (9) has at the end which is connected to the housing (3) a peripheral flange (12), open toward the outside, which is in contact with a zone of narrowing (31) present in the housing (3).

4. Gas sensor according to any one of the preceding claims, **characterized in that** the cable gland (8) and the protector (9) are made of the same material.

5. Gas sensor according to claim 4, **characterized in that** the cable gland (8) and the protector are made entirely of teflon or with a teflon base.

6. Gas sensor according to any one of the preceding claims, **characterized in that** the cable gland (8) includes a chamfer (13) arranged on the perimeter of its surface outside the housing.
